(19) **Europäisches Patentamt / European Patent Office / Office européen des brevets**

(11) **EP 1 960 250 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(21) Anmeldenummer: **06829514.6**

(22) Anmeldetag: **12.12.2006**

(51) Int Cl.:
**B62D 1/19** (2006.01)

(86) Internationale Anmeldenummer:
**PCT/EP2006/011928**

(87) Internationale Veröffentlichungsnummer:
**WO 2007/068436 (21.06.2007 Gazette 2007/25)**

(54) **ENERGIE ABSORBIERENDE MIT FLIESSFÄHIGEN MEDIUM OPERIERENDE VORRICHTUNG**

ENERGY ABSORBING DEVICE OPERATING WITH A FREE-FLOWING MEDIUM

DISPOSITIF D'ABSORPTION D'ENERGIE FONCTIONNANT AVEC UNE SUBSTANCE FLUIDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.12.2005 EP 05027133**

(43) Veröffentlichungstag der Anmeldung:
**27.08.2008 Patentblatt 2008/35**

(73) Patentinhaber: **Inventus Engineering GmbH
6771 St. Anton Im Montafon (AT)**

(72) Erfinder:
• **BATTLOGG, Stefan
A-6771 St. Anton/Montafon (AT)**
• **PÖSEL, Jürgen
A-6700 Bludenz (AT)**

(74) Vertreter: **Torggler, Paul Norbert et al
Wilhelm-Greil-Strasse 16
6020 Innsbruck (AT)**

(56) Entgegenhaltungen:
EP-A- 0 594 173          EP-A- 1 060 961
WO-A-00/29264          WO-A-00/37298
WO-A-01/92071          DE-A1- 2 215 892
US-A- 2 820 471          US-A- 4 993 747
US-A1- 2001 048 362    US-B1- 6 279 952
US-B1- 6 514 001

## Beschreibung

Die Erfindung betrifft eine Energie absorbierende Vorrichtung für den Insassenschutz in Fahrzeugen, mit einem Behälter, der über eine Engstelle in einen Kanal übergeht, und in dem ein magnetorheologisches Medium enthalten ist, und mit einer ein veränderbares Magnetfeld erzeugenden und den Kanal umschließenden Einrichtung zur Beeinflussung der Fließfähigkeit des Mediums im Kanal, wobei die Einrichtung so dem Kanal zugeordnet ist, dass deren Feldlinien den Kanal senkrecht zur Strömungsrichtung des Mediums durchsetzen.

Bei Anwendungen mit magnetorheologischen Flüssigkeiten können generell Nieder-und Hochdrucksysteme unterschieden werden. Stoßdämpfer, Sitzdämpfer, Fitnessgeräte usw. sind Niederdrucksysteme, bei deren wiederholter Aktion in einem Kolben-Zylindersystem oder dergleichen ein Innendruck in der magnetorheologischen Flüssigkeit von nicht mehr als ca. 50 bar aufgebaut werden soll. Die niederen Drücke werden durch das Verhältnis zwischen Zylinderdurchmesser und Kolbendurchmesser erreicht, wobei wegen einer Spule im Kolben größere Kolbendurchmesser erforderlich sind.

Eine Vorrichtung der eingangs genannten Art in Form eines Automobilstoßdämpfers ist beispielsweise aus der US 2,820,471 bekannt. Der Stoßdämpfer weist einen Zylinder mit einem doppelseitig wirkenden Kolben und mit einer Verbindungsleitung zwischen den beiden Zylinderhälften auf. Der Zylinder und die Verbindungsleitung sind mit einer magnetorheologischen Flüssigkeit gefüllt, die über die Verbindungsleitung zwischen den Zylinderthälften hin und her strömen kann. Unter dem Einfluss einer Flachstelle in der Verbindungsleitung zugeordneten Magnetisierungseinrichtung wird die Viskosität der Flüssigkeit verändert, und die Energieabsorption des Stoßdämpfers kann so auf unterschiedliche Ausgangszustände und Bedingungen angepasst werden.

Zum weiteren Stand der Technik gehört die WO 00/29264, die ebenfalls eine ein Kolben-Zylinder-System mit Verbindungsleitung umfassende Energie absorbierende Vorrichtung im Zusammenhang mit einer Sicherheitsgurthalterung zeigt, wobei die Nachgiebigkeit der Gurtsohnaflenhalterung oder die Abprallgeschwindigkeit der Bandspule verändert werden kann.

Bei Aufprallenergie absorbierenden Vorrichtungen ist dies anders, da diese nicht wiederholt sondern nur einmal in einem Notfall eingesetzt werden. Dichtungsprobleme treten hier nicht auf, hingegen entstehen Drücke im Bereich von 50 bar bis ca. 200 bar. Das notwendige Volumen der teuren magnetorheologischen Flüssigkeit ist viel kleiner. Solche Aufprallenergie absorbierende Vorrichtungen sind in Fahrzeugen nicht nur an der Lenksäule, sondern auch an einer Reihe von anderen Bauteilen von Vorteil bzw. notwendig, beispielsweise an Kopfstützen, Sicherheitsgurten, Sitzen und Sitzelementen, usw. Im Extremfall lassen sich in einem Kraftfahrzeug mehr als 20 unterschiedliche Einbauorte finden.

Für den Zusammenstoß relevante Komponenten an Sicherheitsgurten, Airbags usw. sind zurzeit meist einstufig auslösbar, maximal zweistufig. Eine mehrstufige Auslösung ist extrem aufwändig, eine variable Auslösung bisher unmöglich.

Beispielsweise sollte die Lenksäule einen Großteil der Aufprallenergie des Fahrers aufnehmen, also steif ausgeführt werden, wobei die Gegenkraft ca. 8000 N betragen sollte. Ist der Fahrer angegurtet und leicht, genügt eine Gegenkraft von 2000 N. Die viel zu hohe Gegenkraft von 8000 N kann bei leichten und angegurteten Fahrern zu schweren bis tödlichen Verletzungen führen. Ist die Lenkungsgegenkraft aber auf 2000 N eingestellt, würde ein nicht angegurteter Fahrer zu langsam verzögert und mit hoher Restenergie auf den Endanschlag der Lenksäulenverschiebung gedrückt. Da auch hier schwere Verletzungen die Folge sind, wurde versucht, den Airbag und den Sicherheitsgurt zu optimieren, sodass diese Kombination den Großteil der Aufprallenergie des Fahrers absorbiert und nur mehr geringe Restenergie für die Lenksäule übrig lasst, sodass eine kleine Gegenkraft genügt. Allerdings ist dadurch das Problem einer variablen Anpassung nicht gelöst, sondern nur tellverlagert.

Bezogen auf die Verzögerungswerte des Fahrerkörpers ist dies nachteilig, da wertvoller Weg verschenkt wird. Man kann den Aufprall in zwei Wegstrecken unterteilen, nämlich in einen ersten Verzögerungsweg während der Airbag- und Gurtfunktion, der im Durchschnitt etwa 40 cm beträgt, und in einen anschließenden zweiten Verzögerungsweg während der Lenksäufenverformung, der bis zu etwa 10 cm beträgt. Der Körper muss somit im ersten Verzögerungsweg stark verzögert werden, damit die Restenergie bei der Übergabe an den zweiten Verzögerungsweg gering ist. Die Verzögerung ist umgekehrt proportional zum Weg, d.h. der geringe zweite Verzögerungsweg bedeutet eine hohe Verzögerung. Da aber im zweiten Weg nur niedere Gegenkräfte zur Verfügung stehen sollen, um leichte Fahrer nicht zu gefährden, wird eine hohe Verzögerung im ersten Weg in Kauf genommen, sodass der Körper während des ersten Weges stark und bei kleinen und leichten Personen übermäßig stark belastet wird. Die angegebene durchschnittliche Wegstrecke von 40 cm für den ersten Verzögerungsweg bezieht sich auf einen mittelgroßen Fahrer. Bei kleinen Personen, die wesentlich näher am Lenkrad sitzen, ist der erste Verzögerungsweg wesentlich kürzer und etwa 25 cm. Der Anteil des zweiten Verzögerungsweges am Gesamtverzögerungsweg vergrößert sich so auf etwa ein Drittel, ohne dass die auf leichte Fahrer eingestellte Gegenkraft verändert werden kann. Die auf schwere Personen ausgelegte Verzögerung im ersten Verzögerungsweg muss daher noch größer werden und ist teilweise sogar so stark, dass der Körper zurückgeschleudert wird. Bei manchen Fahrzeugen kann daher der Airbag für leichte und kleine Fahrer abgeschaltet werden, wobei dann allerdings der Lenkung die erhöhte Gegenkraftfunktion zukommt.

Sinnvoll und effektiv ist es, den Gesamtweg zu nützen (insgesamt ca. 50 cm) und in der Wegstreckensumme immer adäquat zu verzögern. Nur dies führt zu geringeren Belastungen für den Körper, und ist nur mit einem regelbaren System möglich ist, bei dem das magnetorheologische Medium ausreichend lang dem Magnetfeld ausgesetzt ist. Erfindungsgemäß ist daher bei einer Vorrichtung der eingangs genannten Art vorgesehen, dass der Kanal bei einem Aufprall des Fahrzeugs einen Austrittskanal (5) bildet, in den das Medium durch die äußere Krafteinwirkung gedrückt wird, und dass, um für einen einmaligen Insassenschutz während einer Aufprallzeit $t_a$ die Energieabsorption der Vorrichtung durch Änderung des Strömungswiderstandes der Engstelle zu verändern, die Länge des von der Einrichtung umschlossenen Austrittskanales unter Berücksichtigung einer Verweilzeit $t_v$ für das Medium im Austrittskanal durch folgende mathematische Beziehung zwischen dem Volumen $V_m$ des Mediums im Behälter, der Querschnittsfläche F des Austrittskanales, der Aufpralizeit $t_a$ und der Verweilzeit $t_v$ definiert ist:

$$L \geq \frac{V_m . t_v}{(t_a - t_v) . F}.$$

Die erfindungsgemäße Vorrichtung ist somit ein steuerbarer Energieabsorber, bei dem die Energieabsorption nicht nur in Abhängigkeit von der Fahrzeugverzögerung, dem Aufprallwinkel, der Masse des Fahrers, usw. variabel eingestellt, sondern auch während des Aufpralls verändert werden kann. Die Aufpralizeit ist naturgemäß sehr kurz und liegt entsprechend dem EuroNCAP-Test (<u>Eu</u>ropean <u>N</u>ew <u>Car</u> <u>A</u>ssessment Programme) insbesondere zwischen 30 bis 1.00 Millisekunden. Die Länge des Austrittskanals ist dabei so bemessen, dass die Verweilzeit, in der sich jedes magnetisierbare Partikel in dem Medium im Magnetfeld befindet, lange genug ist, damit sich alle Partikel vollständig ausrichten können. Diese Zeit ist zumindest eine Millisekunde,

Die Länge des Austrittskanales errechnet sich also aus der Formel:

$$L \geq \frac{V_m . t_v}{(t_a - t_v) . F} \qquad \text{bzw.} \qquad L \geq \frac{X . Y . Z . t_v}{(t_a - t_v) . B . H},$$

in der

$V_m$ das Volumen des Mediums im Behälter ist, wobei
X die Breite des Aufnahmeraumes des Behälters,
Y die Höhe des Aufnahmeraumes des Behälters, und
Z die Länge des Aufnahmeraumes des Behälters ist,
$t_v$ die Verweilzeit,
$t_a$ die Aufprallzeit, und
F die Querschnittsfläche des Austrittskanales ist, wobei
B die Breite des Austrittskanales, und
H die Höhe des Austrittskanales ist.

Da die Mindestverweilzeit etwa 1 % bis 2% der Aufprallzeit beträgt, kann sie in einer überschlägigen Rechnung auch vernachlässigt werden, wodurch die errechnete Länge des Austrittskanales um etwa 1 % bis 2% zunimmt. Wie ersichtlich, wirkt sich eine längere Verweilzeit direkt auf die Länge des Austrittskanales aus, in vielen Fällen lässt aber der vorhandene Einbauraum nur die Minimallänge zu.

Für die Beeinflussung des Strömungswiderstandes der Engstelle bieten sich verschiedene Möglichkeiten an. Zum einen ist es denkbar, den Querschnitt zu ändern, beispielsweise durch Unterteilung in mehrere Kanäle, die einzeln gesperrt werden können, durch verstellbare Schieber, Blenden, usw. oder durch mindestens ein Ventil mit mehreren Öffnungsstellungen,

Weiters ist es möglich, die Austrittsmenge pro Zeiteinheit zu variieren, beispielsweise durch Behälter mit über die Länge variierender Querschnittsfläche, sodass die ausgedrückte Menge pro Weg- bzw. Zeiteinheit schwankt.

Magnetorheologischen Flüssigkeiten muss relativ wenig Energie für die Änderung der Fließfähigkeit zugeführt werden. Die Energieabsorption kann an unterschiedliche Ausgangszustände und Bedingungen angepasst werden kann und es sind weder Dichtungen noch mechanisch bewegliche Teile notwendig. Dies ist für die Funktion im Notfall besonders wichtig, da Aufprall dämpfende Vorrichtungen in den meisten Fällen überhaupt nicht zum Einsatz kommen, sodass ihre Funktionsfähigkeit nicht regelmäßig getestet werden kann.

In einem Kolben-Zylindersystem darf die Druckfläche des Kolbens nicht zu gering sein, da sonst der Druck zu hoch wird. Wenn 200 bar Druck, das sind 20 N/mm$^2$ Flächenpressung, nicht überschritten werden sollen, so bedarf es bei einer Aufprallkraft von 8000 N einer Druckfläche von 4 cm$^2$, was einem Kolbendurchmesser von etwa 2,25 cm entspricht. Je größer der Kolbendurchmesser ist, desto kleiner ist der Druck in Zylinder, was von Vorteil ist, desto größer ist aber die verdrängte Flüssigkeitsmenge, was von Nachteil ist, wobei sich das Volumen aus der Druckfläche von 4

cm$^2$ multipliziert mit einem der Lenksäulenverformung entsprechenden Hub, also ca. 10 cm, errechnet, und in diesem Beispiel 40 cm$^3$, also 40 ml beträgt. Aus der Druckfläche und der Verfahrgeschwindigkeit des Kolbens, die sich aus der Verformungsgeschwindigkeit beim Aufprall ableitet (bis zu 5 m/s), ergeben sich der Volumenstrom, ein daraus resultierendes, zu magnetisierendes Volumen pro Zeiteinheit, und eine bestimmte Querschnittsfläche der Engstelle.

Die Engstelle weist eine Eintrittsöffnung auf, die bevorzugt rechteckig ist und durch die Seitenwände des Behälters begrenzt ist, wobei die längere Rechteckseiten bildenden Seitenwände zur Öffnung konvergieren, sodass ein schmaler Schlitz gebildet ist. Der anschließende Austrittskanal weist bevorzugt den gleichen Querschnitt auf und ist durch den Spalt zwischen zwei Magnetpole bildenden Eisenteilen der das Magnetfeld erzeugenden Einrichtung geführt. Um den Abstand zwischen den beiden Polen klein zu halten - die Spalthöhe sollte unter 5 mm liegen, - können die beiden breiten Wände des Austrittskanals im Bereich der Eisenteile unterbrochen sein, sodass das Medium direkt mit den Polflächen in Berührung kommt. Da die Querschnittsfläche nicht verkleinert werden darf, führt eine Verringerung der Spalthöhe aber zu einer Verbreiterung des Austrittskanales. Konstruktiv brauchbare Spalthöhen liegen daher zwischen 1 mm und 3 mm. Eine möglichst optimale Ausführung sieht dabei vor, dass die Querschnittsfläche des Austrittskanales zumindest 10% der Querschnittsfläche des Behälters beträgt.

Die beiden Eisenteile können permanentmagnetisch sein, wobei ihr Magnetfeld durch das Magnetfeld einer ansteuerbaren Spule verstärkt oder abgeschwächt, gegebenenfalls auch deaktiviert werden kann.

In einer anderen Ausführung können die beiden Eisenteile über eine ansteuerbare Spule magnetisierbar sein, um den Strömungswiderstand von einem unteren Grenzwert zu erhöhen. Dieser kann beispielsweise von der Viskosität des unmagnetisierten Mediums und einem gegebenenfalls die Öffnung abdeckenden Berstelement abhängig sein, das bei einem bestimmten Druck des Mediums die Öffnung freigibt.

Für die Stromversorgung ist insbesondere ein Kondensator vorgesehen; es ist aber auch eine andere geeignete Stromquelle, beispielsweise ein Akkumulator denkbar, wenn sie am Verwendungsort zur Verfügung steht.

Das Magnetfeld muss dabei zwar in der Länge, nicht aber in der Breite den gesamten Austrittskanal magnetisch beaufschlagen. Beispielsweise könnte das Magnetfeld auch nur in den beiden Randbereichen vorgesehen werden, sodass ein mittlerer Teil des Mediums unbeeinflusst durch den Austrittskanal strömt.

Weiters kann der Austrittskanal im Magnetfeld auch durch einen Bypasskanal ergänzt werden, welcher zu- oder abgeschaltet werden kann. Damit kann der Gegenkraftbereich vergrößert werden. Der Bypass könnte auch "ins Freie" gehen, was bei sehr hohen Kräften vorteilhaft ist, da der Verstellbereich vergrößert wird.

Nachstehend wird nun die Erfindung anhand der Figuren der beiliegenden Zeichnungen näher beschrieben, ohne darauf beschränkt zu sein. Es zeigen:

| | |
|---|---|
| Fig.1 | einen schematischen Ausschnitt aus einer Lenksäule mit einer erfindungsgemäßen Vorrichtung, |
| Fig. 2 | einen Längsschnitt durch einen Behälter der erfindungsgemäßen Vorrichtung, |
| Fig. 3 | eine schematische Schrägansicht einer erfindungsgemäßen Vorrichtung, |
| Fig. 4 | eine Stirnansicht der Vorrichtung nach Fig. 3 mit Magnetfeldverlauf, |
| Fig. 5 | einen Teilschnitt durch eine bevorzugte Ausführung der Vorrichtung, |
| Fig. 6 und 7 | zwei Schaltbilder zur Beschleunigung des Magnetfeldaufbaus, |
| Fig. 8 und 9 | einen Behälter für einen progressiven Gegenkraftverlauf, |
| Fig. 10 und 11 | einen Behälter für einen degressiven Gegenkraftverlauf, |
| Fig. 12 und 13 | einen Behälter für einen variablen Gegenkraftverlauf |
| Fig. 14 | eine schematische Darstellung des Behälters und der Engstelle, und |
| Fig. 15 | eine schematische Darstellung der erfindungsgemäßen Vorrichtung als Teil einer Kopfstütze. |

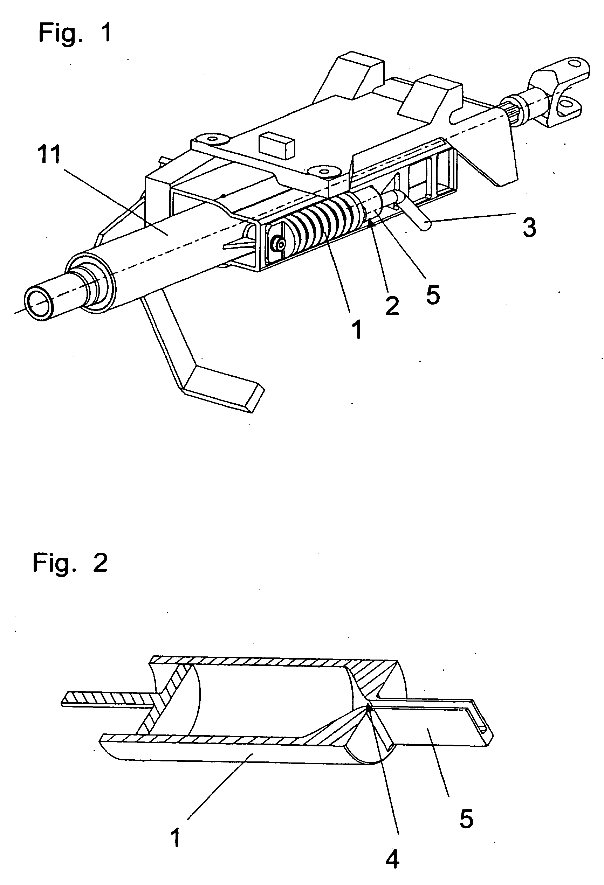

Eine Energie absorbierende Vorrichtung kann, wie Fig. 1 zeigt, beispielsweise an einer Lenksäule 11 parallel zu deren bei einem Zusammenstoß längenverschiebbaren Teilen vorgesehen sein. Die Vorrichtung weist einen Behälter 1 auf, dessen Volumen verkleinerbar ist und in dem eine magnetorheologische Flüssigkeit enthalten ist. Der Behälter 1 ist an einem Ende an einem verschiebbaren Teil der Lenksäule 11 fixiert, während das andere Ende, an das eine Abflussleitung 3 anschließt, an einem nicht verschiebbaren Teil der Lenksäule 11 ansteht oder fixiert ist. Bei einem Aufprall kann sich die Lenksäule 11 verkürzen und die im Behälter 1 enthaltene Flüssigkeit wird durch eine Engstelle 4 und deren Austrittskanal 5 in die Abflussleitung 3 ausgedrückt, wobei der Strömungswiderstand der Engstelle 4 das Auspressen der Flüssigkeit verzögert, so dass Aufprallenergie absorbiert wird.

Der Austrittskanal 5 ist von einer Einrichtung 2 zur Erzeugung eines veränderbaren Magnetfeldes umgeben. Die Einrichtung 2 umfasst einen Elektromagneten, über den ein Magnetfeld erzeugt oder das Magnetfeld eines Permanentmagneten beeinflusst wird. Der Elektromagnet kann über Signale von Sensoren, die einen Aufprall überwachen, in Abhängigkeit von verschiedenen Kriterien, wie Gewicht und Sitzposition des Fahrers usw., angesteuert werden, wobei das veränderbare Magnetfeld die Viskosität der durch die Engstelle zu drückenden Flüssigkeit verändert, und die Gegenkraft größer oder kleiner wird.

In Fig. 2 sind Details besser erkennbar. Der einen beliebigen Querschnitt aufweisende Behälter 1 verjüngt sich zu einer rechteckigen flachen Öffnung an der Engstelle 4 und deren anschließenden Austrittskanal 5, der in die Abflussleitung 3 mündet. Die Wände des Austrittskanals 5 sind vorzugsweise aus nichtmagnetischem Material.

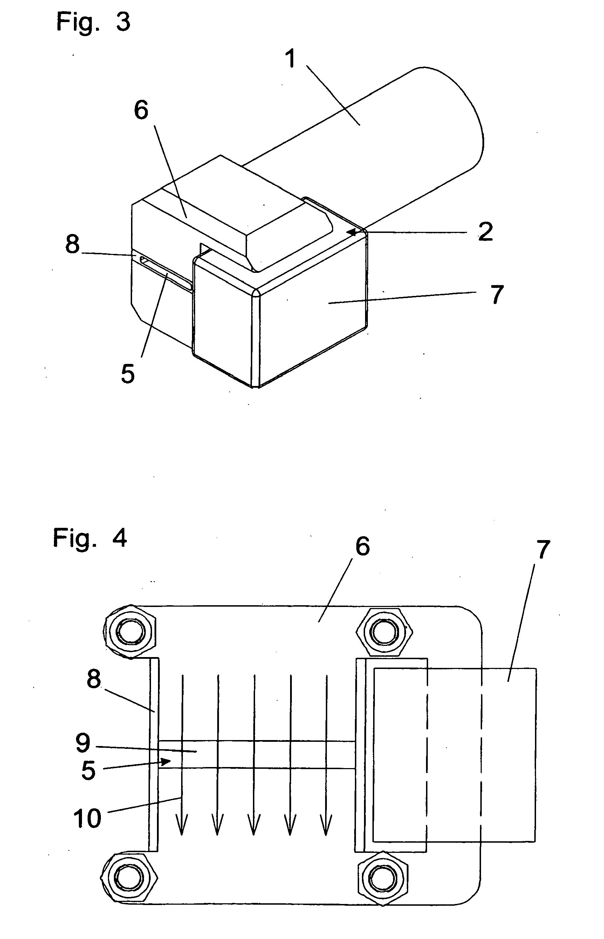

Fig. 3 und 4 zeigen den Aufbau der Einrichtung 2 zur Erzeugung des veränderbaren Magnetfeldes 10 mit C-förmigen Eisenelementen 6, denen eine Spule 7 zugeordnet ist. Der Austrittskanal 5 durchsetzt den Spalt 9 zwischen den Polflächen der Eisenelemente 6. Wie Fig. 4 zeigt, können die beiden breiten Wände des Austrittskanals an den Eisenelementen 6 ausgenommen sein, sodass nur die schmalen Wände 8 vorhanden sind. Der Spalt 9, der eine Höhe von maximal 5 mm, bevorzugt zwischen 1 mm und 3 mm aufweist, ist dadurch minimiert, und die magnetorheologische Flüssigkeit ist in direktem Kontakt mit den Polflächen.

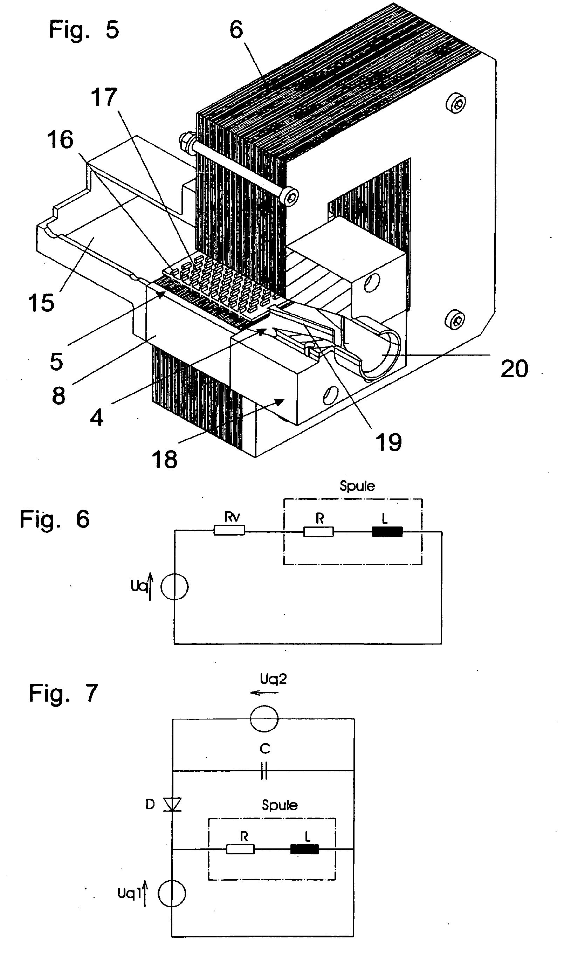

Fig. 5 zeigt konstruktive Details einer erfindungsgemäßen Vorrichtung im Teilschnitt. Der durch die Eisenelemente 6 führende Austrittskanal 5 ist durch eine Trennplatte 16 unterteilt, von der nach beiden Seiten Stege 17 hoch stehen. Die Verweilzeit des Mediums im Austrittskanal 5 wird durch die Einbauteile 16, 17 verlängert, sodass das Medium länger dem Magnetfeld ausgesetzt ist, ohne dass der Elektromagnet größer gemacht werden muss. Die Verweilzeit sollte zumindest eine Millisekunde, bevorzugt zumindest eineinhalb Millisekunden betragen, um auch bei Kraftspitzen, die extrem hohe Strömungsgeschwindigkeiten durch den Austrittskanal 5 bewirken, eine ausreichende Magnetisierung zu erzielen. Weitere Möglichkeiten für die Verlängerung der Verweilzeit sind die Ausbildung von Unebenheiten in den Begrenzungswänden 8 des Austrittskanales 5, alternierend in den Spalt 9 vorstehende bzw. rückspringende Stirnflächen der Eisenelemente 6, oder eine ein- oder mehrmalige Umlenkung des gesamten Austrittskanales 5, beispielsweise in Art von Schikanen.

In Fig. 5 ist anstelle der Abflussleitung ein Auffangbehälter 15 am Ende des Austrittskanales 5 vorgesehen. Die Engstelle 4 ist in dieser Ausführung an einem insbesondere zweiteiligen Behälterkopf 18 ausgebildet, der mit zum Austrittskanal 5 führenden Leitstegen 19 für die gleichmäßige Verteilung und Einleitung des Mediums versehen ist. Der Behälterkopf 18 weist einen Gewindestutzen 20 auf, auf den der Behälter 1 mit einem entsprechenden die Öffnung tragenden Gewinde aufgeschraubt werden kann.

Ist das Magnetfeld anfangs eingeschaltet, dann addiert sich die höhere Gegenkraft zu den Trägheitskräften der Komponenten und den Schlag-/Stosskräften, wodurch es eine hohe Gegenkraftspitze gibt. Besser ist es deshalb, wenn das Magnetfeld so lange ausgeschaltet ist, bis die erste Lastspitze vorbei ist und alle Komponenten beschleunigt sind. Erst danach (nach ca. 3 ms) sollte das Magnetfeld sehr rasch aufgebaut werden (im Bereich von ca. 10 ms). Dadurch kann die Gegenkraftkurve noch besser an die Gegebenheiten angepasst werden und während des Durchströmens des Mediums durch den Austrittskanal 5 geregelt werden, zum Beispiel in Anpassung an eine Fahrerpositions- und/oder Fahrergewichtserkennung, einer Beschleunigungsmessung, und so weiter.

Um das Magnetfeld rasch aufzubauen, gibt es zum Beispiel die in Fig. 6 und 7 gezeigten Schaltungen. Da die Zeitkonstante UR, nach der ca. 63% des Magnetfeldes aufgebaut sind, umso kleiner wird, je größer der Widerstand R ist, kann gemäß Fig. 6 der rasche Aufbau des Magnetfeldes durch einen in Serie zur Spule der Einrichtung 2 geschalteten Vorwiderstand Rv erreicht werden, der dann überbrückt oder ausgeschaltet wird.

Fig. 7 zeigt eine Möglichkeit, in der ein Kondensator C von einer separaten, zweiten Spannungsquelle Uq2 geladen wird und zusammen mit einer Diode D eine im ersten Moment hohe Spannung an die Spule der Einrichtung 2 weitergibt. Die kurze Spannungsspitze beträgt etwa das 2- bis 3-fache der von der ersten Spannungsquelle Uq1 gelieferten Spannung, mit der das Magnetfeld anschließend in der gewünschten Größe gehalten wird.

Fig. 1 und 2 zeigen zylindrische Behälter 1, der nach Fig. 1 in Art eines Faltenbalges ausgebildet und daher komprimierbar ist, und der nach Fig. 2 einen Kolben enthalten kann, um die Flüssigkeit auszudrücken. Da die Querschnittsfläche des Behälters über die Länge im Wesentlichen konstant ist, ist auch der Strömungswiderstand der Engstelle 4 gleich bleibend, da pro Weg- oder Zeiteinheit dieselbe Menge durchgedrückt wird.

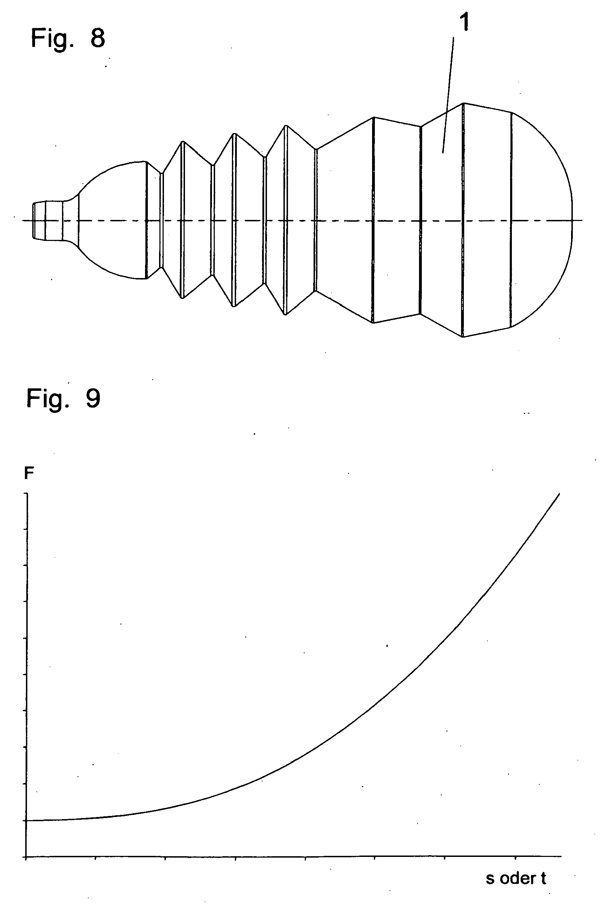

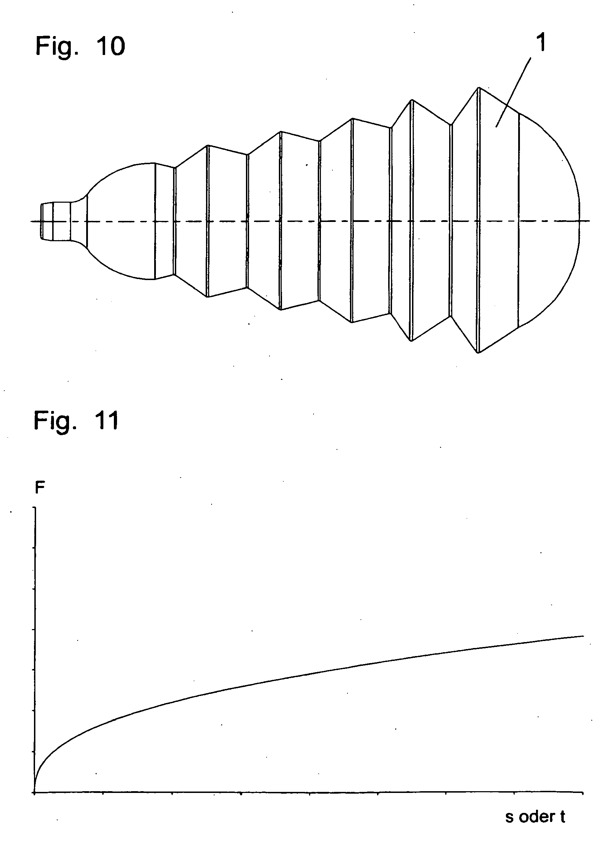

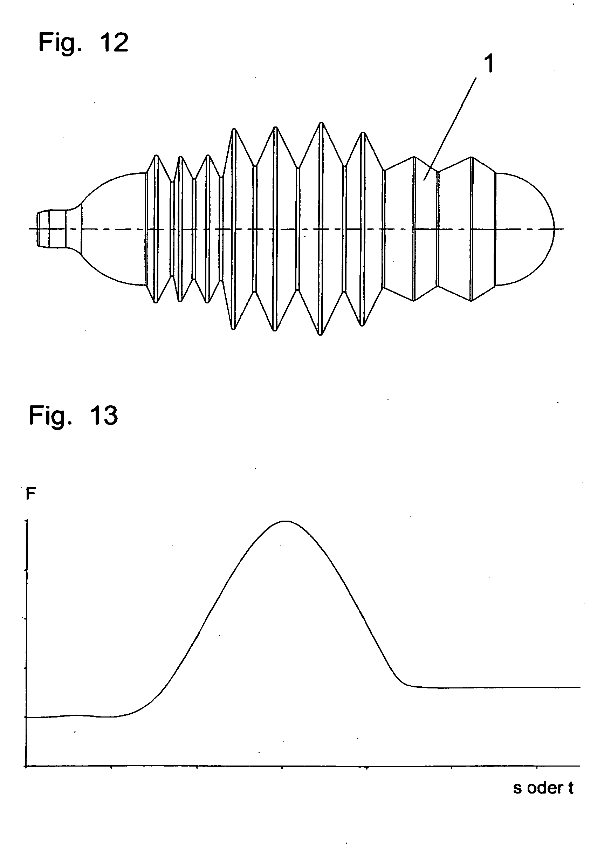

Fig. 8, 10 und 12 zeigen Alternativen, bei denen ohne Beeinflussung an der Engstelle der Strömungswiderstand F progressiv, degressiv oder schwankend sein kann. Fig. 8 zeigt einen komprimierbaren Behälter 1, dessen Querschnitt sich von der Öffnung weg immer mehr vergrößert, so dass, wie Fig. 9 zeigt, der Strömungswiderstand F immer stärker wird. Fig. 10 zeigt einen komprimierbaren Behälter 1, dessen Querschnitt sich von seiner Öffnung weg zuerst mehr, dann geringer vergrößert, sodass die Strömungswiderstand F (Fig. 11) anfangs stärker und später weniger zunimmt. Fig. 12 zeigt schließlich einen komprimierbaren Behälter 1, dessen Querschnitt in der Mitte am größten ist, sodass der Strömungswiderstand F ansteigt und wieder abnimmt (Fig. 13).

Die Ausführungen der Fig. 8 bis 13 zeigen, dass der Strömungswiderstand der Engstelle 4 durch eine entsprechende Behälterform gewählt werden kann, sodass eine Regeleinrichtung an der Engstelle 4 nicht erforderlich ist, um einen variierenden Strömungswiderstand zu erzeugen. Unterschiedliche Aufpralldämpfungswerte können bereits durch die dazupassende Behälterform erreicht werden. Die Regeleinrichtung 2 an der Engstelle 4 ermöglicht aber eine Variierbarkeit des Strömungswiderstandes in Abhängigkeit von verschiedenen Kriterien.

Kommt es zu einem Unfall, so wird durch den Aufprall des Oberkörpers auf das Lenkrad das Volumen des Behälters 1 verringert und die Einrichtung 2 regelt den Durchfluss des Mediums durch den Austrittskanal 5 durch eine entsprechende Änderung der Viskosität in Abhängigkeit von Signalen eines Rechners, der verschiedene Messdaten und Parameter verarbeitet. Bei Nichtgebrauch ist der Elektromagnet stromlos und das enthaltene Medium leichtflüssig.

Ein versehentliches Ausfließen des Mediums verhindert ein die Öffnung des Behälters überdeckendes Berstelement, das bei einem bestimmten Druck bricht. Der Elektromagnet wird daher nur im Unglücksfall erregt, um die Viskosität des magnetorheologischen Mediums zu erhöhen und zu verringern. Alternativ kann das Medium auch in einer dichten Kapsel, beispielsweise in einem Folienbeutel eingeschlossen sein, der in den Behälter eingesetzt ist und durch den Druck platzt. Die Kapsel erübrigt auch das Berstelement.

Als Stromquelle ist ein beispielsweise im Bereich des Lenkrades untergebrachter Kondensator ausreichend, sodass das System auch bei Ausfall der Stromversorgung des Kraftfahrzeuges funktionsfähig bleibt. Fallen die Stromversorgung oder die Elektronik vollständig aus, so wirkt in jedem Fall der Strömungswiderstand der Engstelle allein, der beispielsweise eine Größe von 2000 N aufweist.

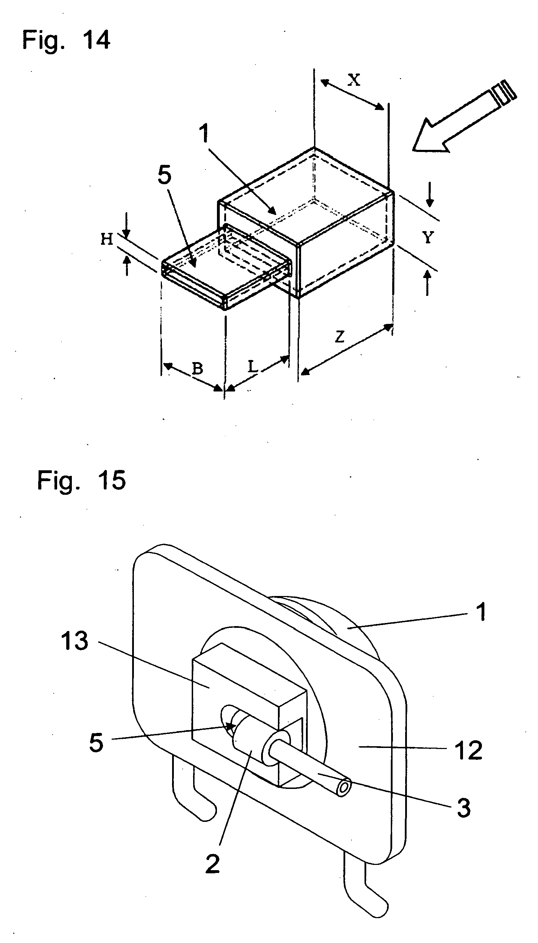

Fig. 14 zeigt schematisch die in der oben stehenden Formel für die Berechnung der Länge L des Austrittskanales 5 verwendeten Größen des Behälters 1 und des Austrittskanales 5.

Fig. 15 zeigt schematisch eine aufpralldämpfende Kopfstütze 12. Der Behälter 1 ist hier nicht zylindrisch, sondern eher in Form einer flacheren Dose, die ebenfalls zusammengedrückt werden kann, wenn der Kopf einer Person auf die Kopfstütze 12 schlägt. Der Austrittskanal 5 ist abgewinkelt und wiederum von der Einrichtung 2 umschlossen. 13 beziffert eine Elektronik, über die die Einrichtung angesteuert wird.


**Patentansprüche**

1. Energie absorbierende Vorrichtung für den Insassenschutz in Fahrzeugen, mit einem Behälter (1), der über eine Engstelle (4) in einen Kanal übergeht, und in dem ein magnetorheologisches Medium enthalten ist, und mit einer ein veränderbares Magnetfeld (10) erzeugenden und den Kanal umschließenden Einrichtung (2) zur Beeinflussung der Fließfähigkeit des Mediums im Kanal, wobei die Einrichtung (2) so dem Kanal zugeordnet ist, dass deren Feldlinien den Kanal senkrecht zur Strömungsrichtung des Mediums durchsetzen, **dadurch gekennzeichnet, dass** der Kanal bei einem Aufprall des Fahrzeugs einen Austrittskanal (5) bildet, in den das Medium durch die äußere Krafteinwirkung gedrückt wird, und dass, um für einen einmaligen Insassenschutz während einer Aufprallzeit $t_a$ die Energieabsorption der Vorrichtung durch Änderung des Strömungswiderstandes der Engstelle (4) zu verändern, die Länge (L) des von der Einrichtung (2) umschlossenen Austrittskanales (5) unter Berücksichtigung einer Verweilzeit $t_v$ für das Medium im Austrittskanal (5) durch folgende mathematische Beziehung zwischen dem Volumen $V_m$ des Mediums im Behälter (1), der Querschnittsfläche F des Austrittskanales (5), der Aufprallzeit $t_a$ und der Verweilzeit $t_v$ definiert ist:
$$L \geq \frac{V_m . t_v}{(t_a - t_v) . F} .$$

2. Vorrichtung nach Anspruch 1, **dadurch gekennzeichnet, dass** die Aufprallzeit $t_a$ zwischen 30 und 100 ms liegt.

3. Vorrichtung nach Anspruch 1, **dadurch gekennzeichnet, dass** die Verweilzeit $t_v$ zumindest 1 ms beträgt.

4. Vorrichtung nach einem der Ansprüche 1 bis 3, **dadurch gekennzeichnet, dass** der Austrittskanal (5) eine im Wesentliche rechteckige Querschnittsfläche aufweist.

5. Vorrichtung nach einem der Ansprüche 1 bis 4, **dadurch gekennzeichnet, dass** die Höhe des Austrittskanales (5) maximal 5 mm beträgt.

6. Vorrichtung nach einem der Ansprüche 1 bis 5, **dadurch gekennzeichnet, dass** die Höhe des Austrittskanales (5) zwischen 1 mm und 2,5 mm beträgt.

7. Vorrichtung nach einem der Ansprüche 1 bis 6, **dadurch gekennzeichnet, dass** der Austrittskanal (5) Wände (8) aus nichtmagnetischem Material aufweist.

8. Vorrichtung nach einem der Ansprüche 1 bis 7, **dadurch gekennzeichnet, dass** der Austrittskanal (5) den Strömungswiderstand erhöhende Einbauten (16, 17) aufweist.

9. Vorrichtung nach einem der Ansprüche 1 bis 8, **dadurch gekennzeichnet, dass** die das veränderbare Magnetfeld (10) erzeugende Einrichtung (2) zumindest einen Permanentmagneten umfasst und ein steuerbarer Elektromagnet zur Änderung des Magnetfeldes des Permanentmagneten vorgesehen ist.

10. Vorrichtung nach einem der Ansprüche 1 bis 8, **dadurch gekennzeichnet, dass** die das veränderbare Magnetfeld (10) erzeugende Einrichtung (2) zumindest einen steuerbaren Elektromagnet umfasst, wobei als Energiequelle für den Elektromagneten zumindest ein Kondensator oder Akkumulator vorgesehen ist.

**11.** Vorrichtung nach einem der Ansprüche 1 bis 10, **dadurch gekennzeichnet, dass** eine Steuerungselektronik (13) und mindestens ein Sensor vorgesehen sind.

**12.** Lenksäule mit einer Energie absorbierenden Vorrichtung nach einem der Ansprüche 1 bis 11.

**13.** Kopfstütze mit einer Energie absorbierenden Vorrichtung nach einem der Ansprüche 1 bis 11.

**14.** Stoßfängeraufhängung mit einer Energie absorbierenden Vorrichtung nach einem der Ansprüche 1 bis 11.

**15.** Fahrzeug mit einer Aufprallenergie absorbierenden Insassenschutzvorrichtung nach einem der Ansprüche 1 bis 11.

**Claims**

**1.** An energy absorbing device for occupant protection in vehicles, comprising a container (1) leading through a constriction (4) into a duct and containing a magneto-rheological medium, and comprising a device (2) generating a variable magnetic field (10) for influencing the flow resistance of the medium, wherein the device (2) is assigned to the duct such that magnetic field lines cross the duct perpendicularly to the flow path, **characterized in that** in the case of an impact onto the vehicle the duct acts as an outlet duct (5) into which the medium is forced by the external force impact, and **in that**, in order to vary the energy absorption of the device for a single-use occupant protection during an impact time $t_a$ by varying the flow resistance of the constriction (4), the length (L) of the outlet duct (5) enclosed by the device (2) in consideration of a dwell time $t_v$ for the medium in the outlet duct (5) is defined by the following mathematic correlation between the volume $V_m$ of the medium in the container (1), the cross-sectional surface F of the oulet duct (5), the impact time $t_a$ and the dwell time $t_v$:

$$L \geq \frac{V_m t_v}{(t_a - t_v).F}$$

**2.** The device according to claim 1, **characterized in that** the impact time $t_a$ is between 30 and 100 ms.

**3.** The device according to claim 1, **characterized in that** the dwell time $t_v$ is is at least ms.

**4.** The device according to one of claims 1 to 3, **characterized in that** the oulet duct (5) has a substantially rectangular cross-section.

**5.** The device according to one of claims 1 to 4, **characterized in that** the height of the outlet duct (5) is 5 mm maximum.

**6.** The device according to one of claims 1 to 5, **characterized in that** the height of the outlet duct (5) is between 1 mm and 2.5 mm.

**7.** The device according to one of claims 1 to 6, **characterized in that** the outlet duct (5) comprises walls (8) of non-magnetic material.

**8.** The device according to one of claims 1 to 7, **characterized in that** the outlet duct comprises internals (16, 17) increasing the flow resistance.

**9.** The device according to one of claims 1 to 8, **characterized in that** the device (2) generating the variable magnetic field (10) comprises at least one permanent magnet, and a controllable electromagnet for varying the magnetic field is provided.

**10.** The device according to one of claims 1 to 8, **characterized in that** the device (2) generating the variable magnetic field (10) comprises at least one controllable electromagnet, wherein at least one condenser or accumulator is provided as an energy source for the electromagnet.

**11.** The device according to one of claims 1 to 10, **characterized in that** an electronic control system (13) and at least one sensor is provided,

**12.** A steering column comprising an energy absorbing device according to one of claims 1 to 11.

**13.** A head support comprising an energy absorbing device according to one of claims 1 to 11.

**14.** A bumper suspension system comprising an energy absorbing device according to one of claims 1 to 11.

**15.** A vehicle comprising an impact energy absorbing occupant protection device according to one of claims 1 to 11.

**Revendications**

**1.** Dispositif d'absorption d'énergie pour la protection d'occupants dans des véhicules, avec un récipient (1) qui se fond par un étranglement (4) en un canal, et qui contient un fluide magnétorhéologique, et avec un dispositif (2) entourant le canal et générant un champ magnétique (10) modifiable pour influencer la fluidité du fluide dans le canal, sachant que le dispositif (2) est associé au canal de sorte que leurs lignes de champ traversent le canal perpendiculairement au sens d'écoulement du fluide, **caractérisé en ce qu'**en cas de collision du véhicule, le canal forme un canal de sortie (5), dans lequel le fluide est pressé sous l'action d'une force extérieure, et **en ce que** pour modifier, en vue d'une protection unique d'occupants pendant un temps de collision $t_a$, l'absorption d'énergie du dispositif par la modification de la résistance à l'écoulement de l'étranglement (4), la longueur (L) du canal de sortie (5) entouré par le dispositif (2) est définie en tenant compte d'un temps de séjour $t_v$ pour le fluide dans le canal de sortie (5) par le rapport mathématique suivant entre le volume $V_m$ du fluide dans le récipient (1), l'aire de la section F du canal de sortie (5), le temps de collision $t_a$ et le temps de séjour $t_v$ :

$$L \geq \frac{V_m \cdot t_v}{(t_a - t_v) \cdot F}$$

**2.** Dispositif selon la revendication 1, **caractérisé en ce que** le temps de collusion $t_a$ est compris entre 30 et 100 ms.

**3.** Dispositif selon la revendication 1, **caractérisé en ce que** le temps de séjour $t_v$ s'élève au moins à 1 ms.

**4.** Dispositif selon l'une quelconque des revendications 1 à 3, **caractérisé en ce que** le canal de sortie (5) présente une aire de section sensiblement rectangulaire.

**5.** Dispositif selon l'une quelconque des revendications 1 à 4, **caractérisé en ce que** la hauteur du canal de sortie (5) s'élève au maximum à 5 mm.

**6.** Dispositif selon l'une quelconque des revendications 1 à 5, **caractérisé en ce que** la hauteur du canal de sortie (5) est comprise entre 1 et 2,5 mm.

**7.** Dispositif selon l'une quelconque des revendications 1 à 6, **caractérisé en ce que** le canal de sortie (5) présente des parois (8) en matériau non magnétique.

**8.** Dispositif selon l'une quelconque des revendications 1 à 7, **caractérisé en ce que** le canal de sortie (5) présente des éléments de montage (16, 17) augmentant la résistance à l'écoulement.

**9.** Dispositif selon l'une quelconque des revendications 1 à 8, **caractérisé en ce que** le dispositif (2) générant le champ magnétique modifiable (10) comporte au moins un aimant permanent et un électroaimant réglable est prévu pour modifier le champ magnétique de l'aimant permanent.

**10.** Dispositif selon l'une quelconque des revendications 1 à 8, **caractérisé en ce que** le dispositif (2) générant le champ magnétique modifiable (10) comporte au moins un électroaimant réglable, sachant qu'au moins un condensateur ou accumulateur est prévu comme source d'énergie pour l'électroaimant.

**11.** Dispositif selon l'une quelconque des revendications 1 à 10, **caractérisé en ce qu'**un système électronique de commande (13) et au moins un capteur sont prévus.

**12.** Colonne de direction avec un dispositif d'absorption d'énergie selon l'une quelconque des revendications 1 à 11.

**13.** Appui-tête avec un dispositif d'absorption d'énergie selon l'une quelconque des revendications 1 à 11.

**14.** Suspension de pare-chocs avec un dispositif d'absorption d'énergie selon l'une quelconque des revendications 1 à 11.

**15.** Véhicule avec un dispositif de protection d'occupants absorbant l'énergie de collision selon l'une quelconque des revendications 1 à 11.

Fig. 1

11

3

5

2

1

Fig. 2

1

4

5

Fig. 3

Fig. 4

Fig. 5

Fig. 6

Spule

Rv   R   L

Uq

Fig. 7

Uq2

C

D

Spule

R   L

Uq1

Fig. 8

1

Fig. 9

F

s oder t

Fig. 10

1

Fig. 11

F

s oder t

Fig. 12

Fig. 13

s oder t

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2820471 A
- WO 0029264 A